# EUROPEAN PATENT SPECIFICATION

(11) **EP 3 655 637 B1**
(45) Date of publication and mention of the grant of the patent: **08.12.2021**
(21) Application number: 19783728.9
(22) Date of filing: 09.10.2019
(51) Int. Cl.: F02C 7/052, B64D 33/02

(54) **VEHICLE PROVIDED, AT THE INTAKE, WITH AN AIR FILTER AND CORRESPONDING AIR FILTER**
FAHRZEUG MIT EINEM LUFTFILTER AM EINLASS UND ENTSPRECHENDER LUFTFILTER
VÉHICULE DOTÉ DE FILTRE À AIR AU NIVEAU DE L'ENTRÉE D'AIR, ET FILTRE À AIR CORRESPONDANT

(30) Priority: 09.10.2018 IT 201800009291
(43) Date of publication of application: 27.05.2020
(73) Proprietor: BMC S.R.L., 40059 Medicina (IT)
(72) Inventor: BERGAMI, Gaetano, 40059 Medicina (BO) (IT)
(74) Representative: Maccagnan, Matteo
(86) International application number: PCT/IB2019/058609
(87) International publication number: WO 2020/075091

(56) References cited:
- US-A1- 2002 182 062
- US-A1- 2004 083 697
- US-A1- 2008 196 369

## Description

### FIELD OF THE INVENTION

The present invention relates to a vehicle provided, at the intake, with an air filter and to a corresponding air filter.

The present invention can advantageously be applied to an aircraft (i.e., a man-made machine that is able to fly by gaining support from the air to transport persons or objects within the Earth's atmosphere) and in particular to a helicopter, to which the following disclosure explicitly refers without any loss of generality.

### PRIOR ART

Modern helicopters are usually provided with at least one turbine engine that drives a rotor blade system which allows said helicopter to take off and land vertically, to hover and to fly laterally, backwards and forwards. The turbine engine has an air intake at the front, through which the turbine engine takes in the external air needed for it to operate (i.e., the external air containing the oxygen needed for combustion).

Generally speaking, the air intake may comprise a metal grid with a relatively large mesh size (in the region of one or two centimeters) the purpose of which is to prevent birds from getting in. Between the air intake and the turbine engine there may be an air filter with the function of filtering the air that is taken in, so as to hold back small impurities (dust and the like) which could, in the long term, lead to premature wear of the turbine engine.

Generally, the air filter comprises a peripheral frame 10 (made of aluminum, of plastic material or of a composite material) that supports a panel 11 of pleated filtering material (i.e. wave-shaped, that is folded on itself to form a succession of waves). Furthermore, the air filter comprises a thin pleated outer reinforcement net and a thin pleated inner reinforcement net which rest against opposite surfaces of the filtering material panel (i.e., enclosing the filtering material panel between them) to give said filtering material panel a stable shape and strength.

The filtering material can be made up of an overlapped series (normally up to six) of layers of gauze (that is of a wide-mesh fabric) oiled (or oil soaked); this solution allows to obtain limited load losses but on the contrary implies a relatively high overall weight. In order to reduce the overall weight (a pressing requirement in aeronautical applications), it has been proposed to replace the layers of oiled gauze with several layers of non-woven fabric; this solution allows to reduce the total weight (above all thanks to the absence of the oil) but on the other hand presents higher pressure drops.

Patent application US2004083697A1 discloses an air filter provided with a wave-shaped filtering material panel made up of a plurality of filtering layers which are superimposed on each other and are enclosed in a sandwich between an external reinforcing net and an internal reinforcing net; some filtering layers can comprise meshes, mats or spun-bond polyester webs, which are prepared from drawn, randomly-laid, and thermally-, or ultrasonically-bonded continuous polyester filaments.

Patent application US2002182062A1 discloses an air filter for a helicopter provided with a wave-shaped filtering material panel made up of a plurality of filtering layers which are superimposed on each other and are enclosed in a sandwich between an external reinforcing net and an internal reinforcing net; preferably, the filter material which constitutes the filtering layers includes cotton or polyester or a felt.

Patent application US2008196369A1 discloses an air filter for a helicopter provided with a wave-shaped filtering material panel made up of a plurality of filtering layers which are superimposed on each other and are enclosed in a sandwich between an external reinforcing net and an internal reinforcing net; in particular, the panel of filtering material is composed of a fabric (for example of cotton or synthetic material or even of other material with fire-retardant characteristics), which is soaked in oil and is folded on itself to form for example four layers overlapping each other.

### DESCRIPTION OF THE INVENTION

The purpose of the present invention is to propose a vehicle provided, at the intake, with an air filter and a corresponding air filter, said vehicle and air filter overcoming the drawbacks described above and, at the same time, being easy and inexpensive to produce.

According to the present invention there is provided a vehicle equipped, at the intake, with an air filter and a corresponding air filter, as claimed in the attached claims.

The claims disclose embodiments of the present invention forming an integral part of the present disclosure.

### BRIEF DESCRIPTION OF DRAWINGS

The present invention will now be described with reference to the accompanying drawings, which illustrate a non-limiting embodiment thereof, in which:
- Figure 1 is a perspective schematic view of a helicopter built according to the present invention;
- Figure 2 is a schematic cross-sectional view of an air box provided with an air filter and through which the air needed to operate a turbine engine of the helicopter shown in Figure 1 is taken in;
- Figure 3 is a plan view of the air filter shown in Figure 2;
- Figure 4 is a cross-sectional view along the line IV-IV of the air filter shown in Figure 2;
- Figure 5 is an exploded cross-sectional view along the line IV-IV of the air filter shown in Figure 2; and
- Figure 6 is an enlarged scale view of a detail of Figures 4 and 5.

### PREFERRED EMBODIMENTS OF THE INVENTION

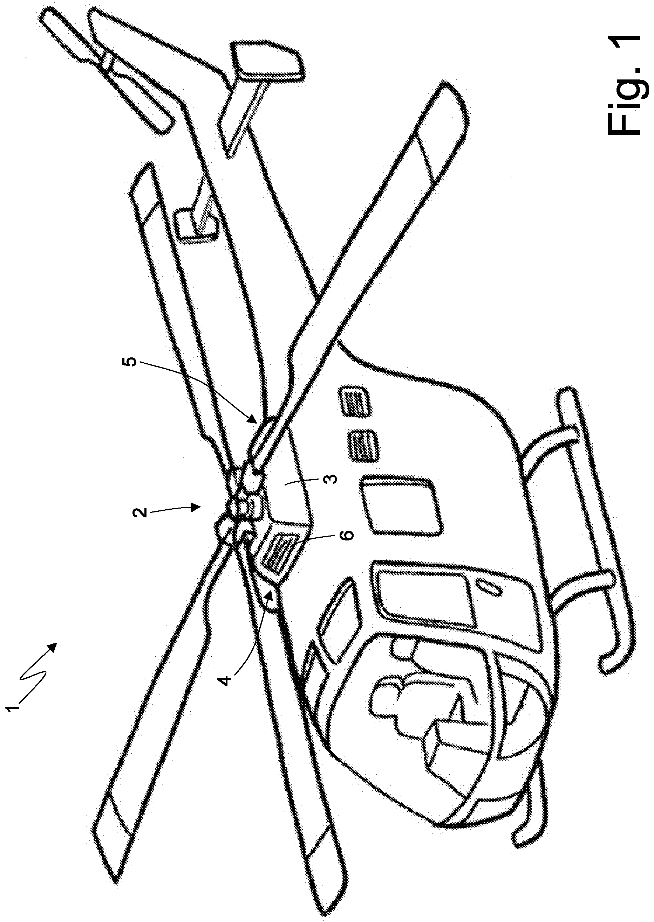

In Figure 1 denoted as a whole by reference numeral 1 is a helicopter comprising a turbine engine 2 that drives a rotor blade system which enables said helicopter to take off and land vertically, to hover and to fly laterally, backwards and forwards.

The turbine engine 2 comprises a tubular housing 3 having, at the front, an air intake 4 (through which the turbine engine 2 takes in the external air needed for it to operate, i.e., the external air containing the oxygen needed for combustion) and, at the back, an air outlet 5 (through which the turbine engine 2 expels the exhaust gas produced by the combustion process). In the area of the air intake 4 there is a metal grid 6 with a relatively large mesh size (in the region of one or two centimeters) the function of which is to prevent birds from getting in.

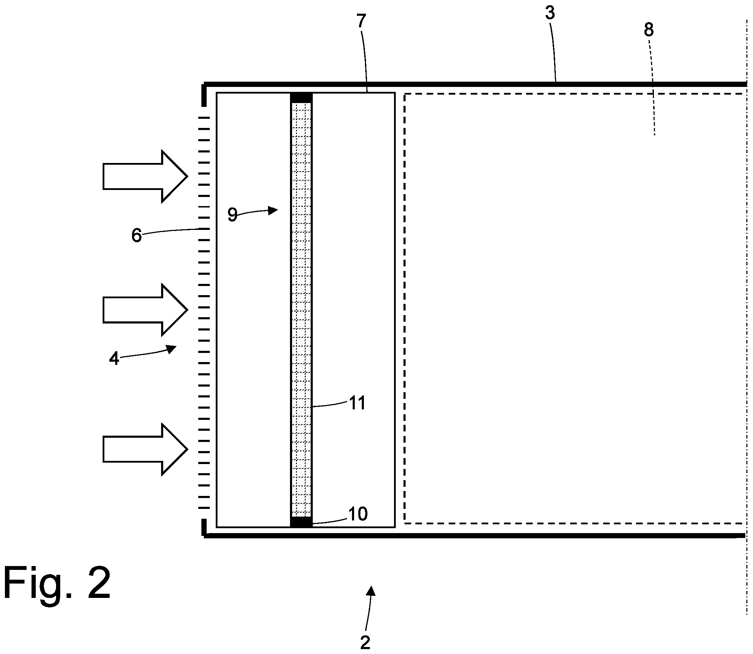

As illustrated in Figure 2, in the tubular housing 3 there is an air box 7 which has, on the inside, a cavity with an inlet opening coupled to the air intake 4 of the tubular housing 3 and an outlet opening coupled to an intake system 8 of the turbine engine 2 (fresh air is conveyed through the intake system 8 towards the moving parts of the turbine engine 2 in which fuel combustion takes place using the air taken in as the comburent air i.e., towards the combustion chamber of the turbine engine 2). Inside the cavity of the air box 7 there is an air filter 9 which is interposed between the inlet opening and the outlet opening and thus divides the cavity into an intake chamber, which is arranged upstream of the air filter 9 and communicates with the external environment, and an outlet chamber, which is arranged downstream of the air filter 9 and communicates with the intake system of the turbine engine 2. The air filter 9 is arranged downstream of the air intake 4 and has the function of filtering the intake air in order to withhold small impurities (dust and the like) which could, in the long term, lead to premature wear of the turbine engine 2. The air filter 9 comprises a peripheral frame 10 (made of aluminum, of plastic material or of a composite material) that supports a panel 11 of filtering material. It is important to observe that the shape of the air filter 9 as seen in a plan view may vary (for example round, rectangular, elliptical, triangular, trapezoidal or a combination of these) depending on the shape of the tubular housing 2, i.e., depending on the shape of the air box 7 in which the air filter 9 is housed.

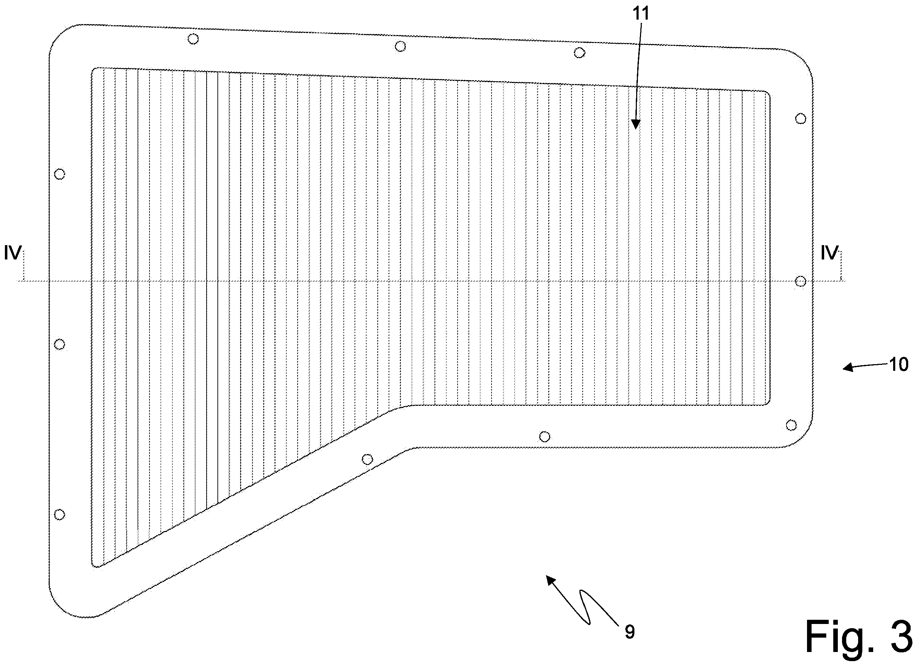

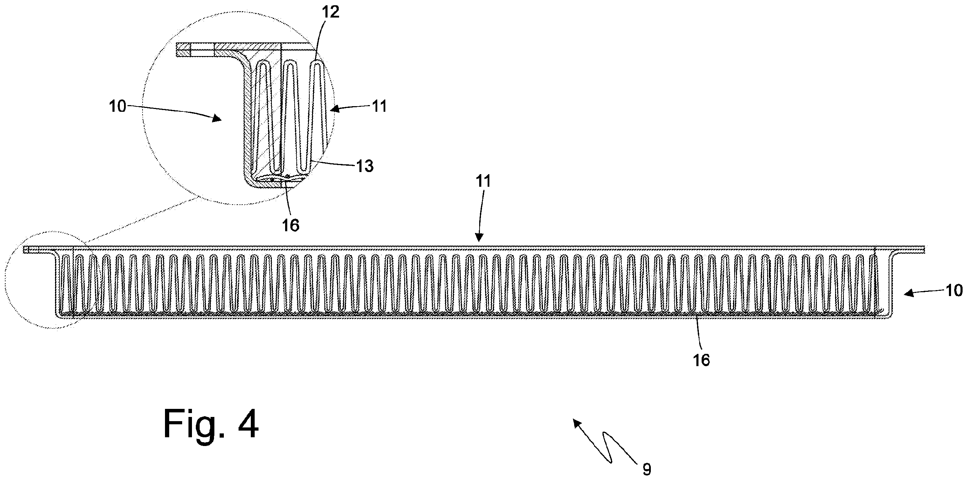

According to that illustrated in Figures 3-6, the air filter 9 comprises the peripheral frame 10 which supports the panel 11 of wave-shaped filtering material (i.e., with a wave-shaped configuration to increase the useful surface of filtering material without increasing the external dimensions).

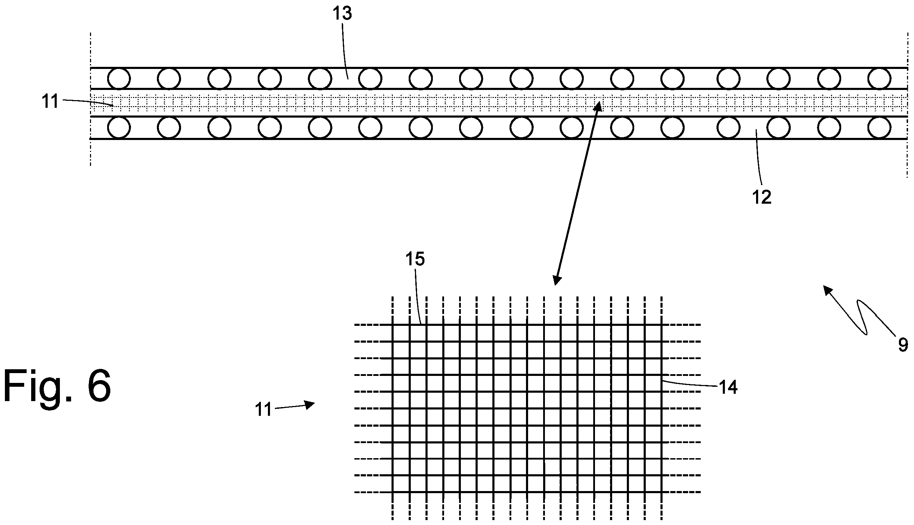

According to that illustrated in Figure 6, the air filter 9 comprises a thin pleated outer reinforcement net 12 and a thin pleated inner reinforcement net 13 which rest against opposite surfaces of the filtering material panel 11 (i.e., enclosing the filtering material panel 11 between them) to give said filtering material panel 11 a stable shape and strength. In other words, the filtering material panel 11 is covered on both sides by the reinforcement nets 12 and 13 (i.e., it is contained between the reinforcement nets 12 and 13) which give said filtering material panel 11 a stable shape. It is important to observe that the reinforcement nets 12 and 13 are dimensioned both to give the panel 11 the required shape stability in order to withstand the air pressure without becoming deformed, even when the helicopter 1 travels at high speed with a strong headwind, and so that it does not constitute too big an obstacle to the air flow (i.e., so as not to produce an excessive loss of load in the intake air flowing through the air filter 9).

The outer reinforcement net 12 rests against an outer surface of the filtering material panel 11 through which the intake air enters to pass through said filtering material panel 11; the inner reinforcement net 13, instead, rests against an inner surface of the filtering material panel 11 which is opposite the outer surface. In other words, the outer reinforcement net 12 is arranged upstream of the filtering material panel 11 with respect to the intake air flow, whereas the inner reinforcement net 13 is arranged downstream of the filtering material panel 11 with respect to the intake air flow.

The filtering material panel 11 consists of a single layer (i.e. only one layer) of a fabric which is made up of a plurality of warp wires 14 (i.e. which make up the warp) and a plurality of weft wires 15 (i.e. which make up the weft) intertwined to form a plurality of meshes; in other words, the fabric constituting the filtering material panel 11 is a product with a flat, thin and flexible surface formed by a weaving of warp threads 14 and weft threads 15 perpendicular to each other (this interweaving determines the formation of a plurality of meshes). The warp wires 14 extend in a linear direction, whereas the weft wires 15 are fed through the shed of the warp wires 14 by *"winding"* them around said warp wires 14. In other words, the weft wires 15 are interlaced with the warp wires 14 in such a way that the filtering material panel 11 is obtained by means of a weaving process (i.e., by interlacing the warp wires 14 with the weft wires 15). The interweaving of the warp wires 14 with the weft wires 15 causes the formation of a plurality of meshes, which have a very small size and generally comprised between 15 and 75 microns (i.e. the sides of each mesh have a dimension comprised between 15 and 75 microns); preferably, the meshes of the polymeric fabric have a dimension comprised between 20 and 50 microns.

It is important to note that the micrometric mesh fabric that makes up the filtering material panel 11 is not soaked (wet) with any type of liquid (particularly oil). In other words, the micrometric mesh polymer fabric that makes up the filtering material panel 11 blocks the largest particles present in the sucked air only by means of mechanical retention (i.e. it blocks the larger particles of the micrometric mesh by mechanical interference) without using any type of liquid that is absorbed by (wets) the micrometric mesh fabric.

The warp wires 14 and the weft wires 15 are made of a polymeric material; preferably the warp wires 14 and the weft wires 15 are made of PEEK (polyether ether ketone) which is completely hydrophobic, but other polymers such as polyethylene terephthalate or polyethylene terephthalate (PET) or polyamides (PA) may also be used. Preferably, the warp wires 14 and the weft wires 15 present: a specific weight comprised between 1.20 and 1.40 g/mm³, a textile resistance comprised between 33 and 75 daN/mm², a relative resistance in wet conditions comprised between 95% and 100%, a breaking elongation comprised between 20% and 40%, and a moisture absorption at 20°C and 65% relative humidity less than a 1%.

As mentioned previously, the filtering material panel 11 consists of a single layer of thick meshes (or micrometrically meshes) polymer fabric having a size between 15 and 75 microns (a micrometric mesh has a maximum mesh size of 100 microns); in other words, there are no more overlapped layers of fabric but there is a single layer of fabric, i.e. the warp wires 14 and the weft wires 15 constituting the single layer are not superposed other warp wires 14 and weft wires 15.

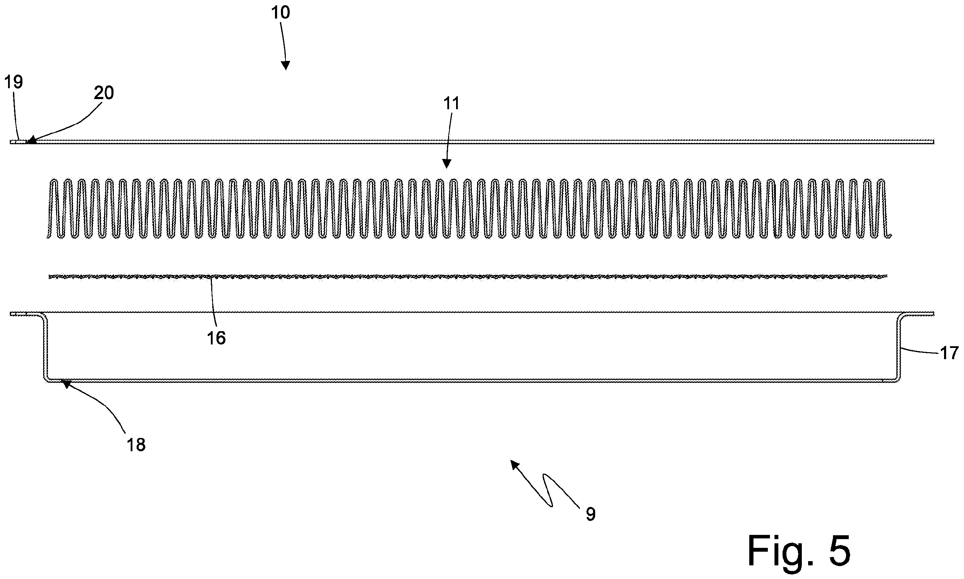

According to a possible embodiment shown in Figure 5, both reinforcement nets 12 and 13 are made of aluminum (lighter and less resistant material) and in this case it is generally also provided a steel (heavier and more resistant material) flat stiffening grid 16, which is internally disposed (i.e. it rests on the inner side of the filtering material panel 11) and has the function of helping the corrugated filtering material panel 11 to withstand pressure determined by the air in suction without deformations (the function of the reinforcing stiffening grid 16 is more important in the case of air filters having a high surface). According to an alternative embodiment, only one of the reinforcing nets 12 and 13 is made of aluminum while the other of the reinforcing nets 12 and 13 is made of steel; in this embodiment the stiffening grid 16 is not present because its function is replaced by the reinforcing mesh 12 or 13 made of steel (i.e. the stiffening grid 16 is integrated / incorporated in one of the reinforcing nets 12 and 13).

As shown in Figure 5, the peripheral frame 10 comprises a cup-shaped main body 17 having a perforated bottom wall (that is, centrally provided with a large through hole 18) and a flat cover 19 which is permanently connected to the main body 17 (for example glued or riveted) and is perforated (i.e. it is centrally provided with a large through hole 20). The filtering material panel 11 is enclosed between the main body 17 and the cover 19, i.e. it is kept inside the main body 17 by the cover 19.

To manufacture the air filter 9, the reinforcement nets 12 and 13 and the filtering material panel 11 are manufactured separately as flat pieces, then the reinforcement nets 12 and 13 are placed on opposite surfaces of the filtering material panel 11 to form a unit (i.e., a *"sandwich"*) which is also flat and is then bent in a wave shape to give said unit its final shape; lastly, said wave-shaped unit is coupled to the peripheral frame 10 (usually by means of glue and/or resin) which, in addition to giving the air filter 9 a stable shape, also has the function of holding together the unit formed by the reinforcement nets 12 and 13 and the filtering material panel 11.

In the embodiment illustrated in the accompanying Figures, the air filter 9 has a flat, practically rectangular shape (and as a consequence the filtering material panel 11 also has the same shape), but the air filter 9 (and thus the filtering material panel 11) could clearly be of any other shape to adapt to the shape of the air intake; by way of example, the air filter 9 (and thus the filtering material panel 11) could have a flat circular or elliptical shape, a cylindrical shape, a cone shape, a truncated-cone shape, etc.

The embodiment illustrated by way of example in the accompanying Figures refers to a helicopter 1, but the present invention may also be advantageously used in any type of aircraft or other vehicle, including road or sea vehicles provided with an engine which must suck in air from the outside in order to operate.

The embodiments described herein can be combined without departing from the scope of protection of the present invention, which is defined by the appended claims.

Numerous advantages are achieved with the helicopter 1 described above.

Firstly, the helicopter 1 described above comprises an air filter 9 which, at the same time, has a decidedly reduced overall weight (lower than the use of non-woven fabric), and of low load losses (even better than the oil bath system); this result is obtained thanks to the fact that the filtering material panel 11; this result is obtained thanks to the fact that the panel filtering material panel 11 consists of a single layer of a polymeric fabric (i.e. a web of warp threads 14 and weft threads 15) with micrometric meshes.

Also the integration of the stiffening grid 16 in the external reinforcement net 12 or in the internal reinforcement net 13 (i.e. the replacement of the stiffening grid 16 with one of the two reinforcement nets 12 and 13 made of steel) allows to further reduce the however the overall 9 air filter.

Moreover the polymeric fabric can be easily rendered hydrophobic (using for its realization hydrophobic polymers such as PEEK) also improving the use of the turbine engine 2 in case of rain or flight on the seas.

Finally, the realization of the air filter 9 is relatively simple and of low cost since the polymeric fabric with micrometric meshes is commercially available.

### LIST OF REFERENCE NUMBERS OF FIGURES

- 1: helicopter
- 2: turbine engine
- 3: tubular housing
- 4: air intake
- 5: air outlet
- 6: metal grid
- 7: air box
- 8: intake system
- 9: air filter
- 10: peripheral frame
- 11: filtering material panel
- 12: outer reinforcement net
- 13: inner reinforcement net
- 14: warp wires
- 15: weft wires
- 16: stiffening grid
- 17: main body
- 18: through hole
- 19: cover
- 20: through hole

## Claims

1. A vehicle (1) provided with an engine (2), at least one air intake (4) through which the engine (2) takes in the external air needed to operate, and an air filter (9), which is arranged downstream of the air intake (4); the air filter (9) comprises:
one wave-shaped filtering material panel (11) comprising a fabric layer which is made up of a plurality of weft wires (15) and a plurality of warp wires (14) interlaced with one another to form a plurality of meshes;
an outer reinforcement net (12), which rests against an outer surface of the filtering material panel (11), through which the air taken in enters so as to flow through said filtering material panel (11); and
an inner reinforcement net (13), which is rests against an inner surface of the filtering material panel (11) opposite the outer surface;
the vehicle (1) is **characterized in that:**
the filtering material panel (11) consists of a single layer of fabric;
the warp wires (14) and the weft wires (15) which make up the fabric of the filtering material panel (11) are made of polymeric material; and
the fabric meshes of the filtering material panel (11) have a micrometric size comprised between 15 and 75 microns.

2. The vehicle (1) according to claim 1, wherein the fabric meshes of the filtering material panel (11) have a micrometric size comprised between 20 e 50 microns.

3. The vehicle (1) according to claim 1 or 2, wherein the warp wires (14) and the weft wires (15) which make up the filtering material panel (11) are made of PEEK, PET or PA.

4. The vehicle (1) according to claim 1, 2 or 3, wherein the warp wires (14) and the weft wires (15) which make up the filtering material panel (11) present:
a specific weight comprised between 1.20 and 1.40 g/mm³,
a textile resistance comprised between 33 and 75 daN/mm2,
a relative resistance in wet conditions comprised between 95% and 100%,
a breaking elongation comprised between 20% and 40%, and
a moisture absorption at 20°C and 65% relative humidity less than a 1%.

5. The vehicle (1) according to one of the claims 1 to 4, wherein:
both reinforcement nets (12, 13) are made of aluminum; and
the air filter (9) comprises a flat stiffening grid (16) which rests on the filtering material panel (11) and is made of steel.

6. The vehicle (1) according to one of the claims 1 to 4, wherein:
one of the two reinforcing nets (12, 13) is made of aluminum while the other of the two reinforcing nets (12 and 13) is made of steel; and
the air filter (9) does not provide any flat stiffening grid (16) which rests on the filtering material panel (11).

7. The vehicle (1) according to one of the claims 1 to 6, wherein the air filter (9) comprises a peripheral frame (10) which supports the filtering material panel (11) and comprises in turn:
a cup-shaped main body (17) having a perforated bottom wall; and
a flat cover (19) which is permanently connected to the main body (17) and is perforated.

8. The vehicle (1) according to one of the claims 1 to 7, wherein the micrometric mesh fabric that makes up the filtering material panel (11) is not soaked, i.e. wet, with any type of liquid.

9. An air filter (9) for an air intake (4) of an engine (2) of a vehicle (1); the air filter (9) comprises:
one wave-shaped filtering material panel (11) comprising a fabric layer which is made up of a plurality of weft wires (15) and a plurality of warp wires (14) interlaced with one another to form a plurality of meshes;
an outer reinforcement net (12), which rests against an outer surface of the filtering material panel (11), through which the air taken in enters so as to flow through said filtering material panel (11); and
an inner reinforcement net (13), which is rests against an inner surface of the filtering material panel (11) opposite the outer surface;
the air filter (9) is **characterized in that:**
the filtering material panel (11) consists of a single layer of fabric;
the warp wires (14) and the weft wires (15) which make up the fabric of the filtering material panel (11) are made of polymeric material; and
the fabric meshes of the filtering material panel (11) have a micrometric size comprised between 15 and 75 microns.

## Patentansprüche

1. Fahrzeug (1), das mit einem Motor (2), mindestens einem Lufteinlass (4), durch den der Motor (2) die zum Betrieb erforderte Außenluft aufnimmt, und einem Luftfilter (9), der stromabwärts des Lufteinlasses (4) angeordnet ist, versehen ist; wobei der Luftfilter (9) Folgendes umfasst:
eine wellenförmige Filtermaterialplatte (11) die eine Gewebeschicht umfasst, die aus einer Vielzahl von Schussdrähten (15) und einer Vielzahl von Kettdrähten (14) gebildet ist, die so miteinander verflochten sind, dass sie eine Vielzahl von Maschen bilden;
ein äußeres Verstärkungsnetz (12), das an einer Außenfläche der Filtermaterialplatte (11) anliegt, durch das die aufgenommene Luft so eintritt, dass sie durch die Filtermaterialplatte (11) strömt;
ein inneres Verstärkungsnetz (13), das an einer Innenfläche der Filtermaterialplatte (11) anliegt, die entgegengesetzt zu der Außenfläche ist;
wobei das Fahrzeug (1) **dadurch gekennzeichnet ist, dass:**
die Filtermaterialplatte (11) aus einer einzigen Schicht aus Gewebe besteht;
die Kettdrähte (14) und die Schussdrähte (15), die das Gewebe der Filtermaterialplatte (11) bilden, aus Polymermaterial hergestellt sind; und
die Gewebemaschen der Filtermaterialplatte (11) eine mikrometrische Größe zwischen 15 und 75 Mikrometer aufweisen.

2. Fahrzeug (1) nach Anspruch 1, wobei die Gewebemaschen der Filtermaterialplatte (11) eine mikrometrische Größe zwischen 20 und 50 Mikrometer aufweisen.

3. Fahrzeug (1) nach Anspruch 1 oder 2, wobei die Kettdrähte (14) und die Schussdrähte (15), die die Filtermaterialplatte (11) bilden, aus PEEK, PET oder PA hergestellt sind.

4. Fahrzeug (1) nach Anspruch 1, 2 oder 3, wobei die Kettdrähte (14) und die Schussdrähte (15), die die Filtermaterialplatte (11) bilden, Folgendes aufweisen:
ein spezifisches Gewicht zwischen 1,20 und 1,40 g/mm³,
eine Textilbeständigkeit zwischen 33 und 75 daN/mm²,
eine relative Beständigkeit unter fechten Bedingungen zwischen 95 % und 100 %,
eine Bruchdehnung zwischen 20 % und 40 %, und
eine Feuchtigkeitsaufnahme bei 20 °C und 65 % relativer Feuchtigkeit von weniger als 1 %.

5. Fahrzeug (1) nach einem der Ansprüche 1 bis 4, wobei:
beide Verstärkungsnetze (12, 13) aus Aluminium hergestellt sind; und
der Luftfilter (9) ein flaches Versteifungsgitter (16) umfasst, das auf der Filtermaterialplatte (11) aufliegt und aus Stahl hergestellt ist.

6. Fahrzeug (1) nach einem der Ansprüche 1 bis 4, wobei:
eines der zwei Verstärkungsnetze (12, 13) aus Aluminium hergestellt ist, wohingegen das andere der zwei Verstärkungsnetze (12 und 13) aus Stahl hergestellt ist; und
der Luftfilter (9) kein flaches Versteifungsgitter (16), das auf der Filtermaterialplatte (11) aufliegt, vorsieht.

7. Fahrzeug (1) nach einem der Ansprüche 1 bis 6, wobei der Luftfilter (9) einen Umfangsrahmen (10) umfasst, der die Filtermaterialplatte (11) stützt und seinerseits Folgendes umfasst:
einen becherförmigen Hauptkörper (17), der eine perforierte Bodenwand aufweist; und
eine flache Abdeckung (19), die fest mit dem Hauptkörper (17) verbunden und perforiert ist.

8. Fahrzeug (1) nach einem der Ansprüche 1 bis 7, wobei das mikrometrische Maschengewebe, das die Filtermaterialplatte (11) bildet, nicht mit einer beliebigen Art von Flüssigkeit getränkt (d. h. durchnässt) ist.

9. Luftfilter (9) für einen Lufteinlass (4) eines Motors (2) eines Fahrzeugs (1); wobei der Luftfilter (9) Folgendes umfasst:
eine wellenförmige Filtermaterialplatte (11) die eine Gewebeschicht umfasst, die aus einer Vielzahl von Schussdrähten (15) und einer Vielzahl von Kettdrähten (14) gebildet ist, die so miteinander verflochten sind, dass sie eine Vielzahl von Maschen bilden;
ein äußeres Verstärkungsnetz (12), das an einer Außenfläche der Filtermaterialplatte (11) anliegt, durch das die aufgenommene Luft so eintritt, dass sie durch die Filtermaterialplatte (11) strömt;
ein inneres Verstärkungsnetz (13), das an einer Innenfläche der Filtermaterialplatte (11) anliegt, die entgegengesetzt zu der Außenfläche ist;
wobei der Luftfilter (9) **dadurch gekennzeichnet ist, dass:**
die Filtermaterialplatte (11) aus einer einzigen Schicht aus Gewebe besteht;
die Kettdrähte (14) und die Schussdrähte (15), die das Gewebe der Filtermaterialplatte (11) bilden, aus Polymermaterial hergestellt sind; und
die Gewebemaschen der Filtermaterialplatte (11) eine mikrometrische Größe zwischen 15 und 75 Mikrometer aufweisen.

## Revendications

1. Véhicule (1) doté d'un moteur (2), d'au moins une entrée d'air (4) à travers laquelle le moteur (2) prélève l'air externe nécessaire pour fonctionner, et un filtre à air (9), qui est agencé en aval de l'entrée d'air (4) ; le filtre à air (9) comprend :
un panneau en matériau filtrant (11) en forme de vague comprenant une couche d'étoffe qui est constituée d'une pluralité de fils de trame (15) et d'une pluralité de fils de chaîne (14) entrelacés les uns avec les autres pour former une pluralité de mailles ;
un filet de renforcement externe (12), qui repose contre une surface externe du panneau en matériau filtrant (11), à travers lequel l'air prélevé entre de façon à s'écouler à travers ledit panneau en matériau filtrant (11) ; et
un filet de renforcement interne (13), qui repose contre une surface interne du panneau en matériau filtrant (11) opposée à la surface externe ;
le véhicule (1) est **caractérisé en ce que** :
le panneau en matériau filtrant (11) consiste en une seule couche d'étoffe ;
les fils de chaîne (14) et les fils de trame (15) qui constituent l'étoffe du panneau en matériau filtrant (11) sont réalisés en matériau polymérique ; et
les mailles d'étoffe du panneau en matériau filtrant (11) ont une taille micrométrique comprise entre 15 et 75 microns.

2. Véhicule (1) selon la revendication 1, dans lequel les mailles d'étoffe du panneau en matériau filtrant (11) ont une taille micrométrique comprise entre 20 et 50 microns.

3. Véhicule (1) selon la revendication 1 ou 2, dans lequel les fils de chaîne (14) et les fils de trame (15) qui constituent le panneau en matériau filtrant (11) sont réalisés en PEEK, PET ou PA.

4. Véhicule (1) selon la revendication 1, 2 ou 3, dans lequel les fils de chaîne (14) et les fils de trame (15) qui constituent le panneau en matériau filtrant (11) présentent :
un poids spécifique compris entre 1,20 et 1,40 g/mm³,
une résistance textile comprise entre 33 et 75 daN/mm²,
une résistance relative en conditions mouillées comprise entre 95 % et 100 %,
un allongement de rupture compris entre 20 % et 40 %, et
une absorption d'humidité à 20 °C et une humidité relative de 65 % inférieure à 1%.

5. Véhicule (1) selon l'une des revendications 1 à 4, dans lequel :
les deux filets de renforcement (12, 13) sont réalisés en aluminium ; et
le filtre à air (9) comprend une grille de raidissement plate (16) qui repose sur le panneau en matériau filtrant (11) et est réalisée en acier.

6. Véhicule (1) selon l'une des revendications 1 à 4, dans lequel :
l'un des deux filets de renforcement (12, 13) est réalisé en aluminium tandis que l'autre des deux filets de renforcement (12 et 13) est réalisé en acier ; et
le filtre à air (9) ne fournit pas de grille de raidissement plate (16) qui repose sur le panneau en matériau filtrant (11).

7. Véhicule (1) selon l'une des revendications 1 à 6, dans lequel le filtre à air (9) comprend un cadre périphérique (10) qui supporte le panneau en matériau filtrant (11) et comprend quant à lui :
un corps principal en forme de coupelle (17) ayant une paroi de fond perforée ; et
un couvercle plat (19) qui est raccordé à demeure au corps principal (17) et est perforé.

8. Véhicule (1) selon l'une des revendications 1 à 7, dans lequel l'étoffe à mailles micrométriques qui constitue le panneau en matériau filtrant (11) n'est pas trempée, c'est-à-dire mouillée, d'un type quelconque de liquide.

9. Filtre à air (9) pour une entrée d'air (4) d'un moteur (2) d'un véhicule (1) ; le filtre à air (9) comprend :
un panneau en matériau filtrant (11) en forme de vague comprenant une couche d'étoffe qui est constituée d'une pluralité de fils de trame (15) et d'une pluralité de fils de chaîne (14) entrelacés les uns avec les autres pour former une pluralité de mailles ;
un filet de renforcement externe (12), qui repose contre une surface externe du panneau en matériau filtrant (11), à travers lequel l'air prélevé entre de façon à s'écouler à travers ledit panneau en matériau filtrant (11) ; et
un filet de renforcement interne (13), qui repose contre une surface interne du panneau en matériau filtrant (11) opposée à la surface externe ;
le filtre à air (9) est **caractérisé en ce que** :
le panneau en matériau filtrant (11) consiste en une seule couche d'étoffe ;
les fils de chaîne (14) et les fils de trame (15) qui constituent l'étoffe du panneau en matériau filtrant (11) sont constitués de matériau polymérique ; et
les mailles d'étoffe du panneau en matériau filtrant (11) ont une taille micrométrique comprise entre 15 et 75 microns.
